# EUROPÄISCHE PATENTSCHRIFT

(11) **EP 3 133 462 B1**
(45) Veröffentlichungstag und Bekanntmachung des Hinweises auf die Patenterteilung: **03.10.2018**
(21) Anmeldenummer: 16182300.0
(22) Anmeldetag: 02.08.2016
(51) Int. Cl.: G05D 23/13

(54) **THERMOSTATVENTIL MIT ZWANGSFÜHRUNG AUFWEISENDER ABDECKKAPPE**
THERMOSTATIC VALVE WITH A CAP WITH A DIRECTIONAL BIAS
VALVE THERMOSTATIQUE COMPRENANT UN CAPUCHON A GUIDAGE FORCE

(30) Priorität: 11.08.2015 DE 102015113235
(43) Veröffentlichungstag der Anmeldung: 22.02.2017
(73) Patentinhaber: Ideal Standard International NV, 1935 Zaventem (BE)
(72) Erfinder: Schmitz, Walter, 54518 Bruch (DE)
(74) Vertreter: Feucker, Max Martin

(56) Entgegenhaltungen:
- EP-A2- 0 745 798
- EP-A2- 1 752 695
- EP-B1- 0 875 703

## Beschreibung

Die vorliegende Erfindung betrifft ein sanitäres Thermostatmischventil mit einer in einem Gehäuse angeordneten, ein Thermostatelement aufweisenden Mischerkartusche, die eine Solltemperatur des Mischwassers festlegt, wobei die Höhe der Solltemperatur durch eine auf einen Anschlag für das Thermostatelement des Thermostatventils wirkende Verstelleinheit eingestellt werden kann, über die eine Abdeckkappe gestülpt ist.

Bei solchen Thermostatmischventilen ist es bei einigen Anwendungen erforderlich, dass das Thermostatmischventil zur Abtötung von Legionellen von Zeit zu Zeit ausschließlich mit heißem Wasser gespült wird. Zum Spülen mit heißem Wasser wird die Abdeckkappe von dem Thermostatmischventil entfernt und die Mischwassertemperatur durch Betätigen der Verstelleinheit erhöht. Um nach dem Spülen mit heißem Wasser die Solltemperatur wieder einzustellen, muss die Verstelleinheit wieder die der Solltemperatur entsprechende Stellung einnehmen, was nur durch Ermitteln der Temperatur des Mischwassers erfolgen kann. Nach dem Spülen mit Heißwasser muss also aufwändig durch Überwachen der Mischwassertemperatur die der Solltemperatur entsprechende Stellung der Verstelleinheit gefunden werden.

Ein Thermostatmischventil mit den eingangs genannten Merkmalen ist aus DE 10 2004 050 996 B4 bekannt, bei welchem der Anschlag für das Thermostatelement mittels eines als Verstelleinheit aufzufassenden Einstellgriffs zum Ändern der Höhe der Solltemperatur des Mischwassers in axialer Richtung versetzt werden kann. Damit das Thermostatmischventil ausschließlich mit Heißwasser gespült werden kann, ist ein Spülorgan vorgesehen, welches mittels eines Anlüfthebels den Anschlag abheben kann. Nach dem Betätigen des Spülorgans kehrt der Anschlag wieder in die von dem Einstellgriff vorgegebene Stellung für die Solltemperatur zurück. Bei einem solchen Thermostatmischventil ist also ein zusätzliches Werkzeug für die Heißwasserspülung erforderlich.

Ein Stellgriff für ein Thermostatmischventil ist aus DE 195 45 587 A1 bekannt, bei dem eine Abdeckkappe des Griffes in einer aufgeschobenen Stellung mit einem axialen Vorsprung in einem Ringnutbogenstück angeordnet ist. In der aufgeschobenen Stellung wird eine Drehbewegung der Abdeckkappe durch die Enden des Ringnutbogenstücks begrenzt, so dass durch die so von dem Ringnutbogenstück gebildeten Anschläge eine minimale und maximale Mischwassertemperatur vorgegeben ist. Die Mischwassertemperatur kann also in der aufgeschobenen Stellung der Abdeckkappe auch unbeabsichtigt kontinuierlich geändert werden. Ein weiterer Stellgriff für ein Wasserventil ist aus DE 10 2006 045 540 A1 bekannt.

Aus EP 1 752 695 A2 und EP 0 745 798 A2 ist jeweils ein Thermostatmischventil bekannt, bei denen die Mischwassertemperatur auch in der aufgeschobenen Stellung der Abdeckkappe kontinuierlich geändert werden kann, wobei eine maximale Mischwassertemperatur dadurch gegeben ist, dass im Normalbetrieb ein ortsfester Festanschlag mit einem lösbaren Anschlag zusammenwirkt. Um für einen Spülvorgang die Mischwassertemperatur über die maximale Mischwassertemperatur des Normalbetriebs zu erhöhen, kann der lösbare Anschlag verschoben werden. In dieser verschobenen Stellung ist die Drehbewegung der Verstelleinheit nicht mehr durch den Anschlag begrenzt.

Aufgabe der vorliegenden Erfindung ist es daher, die mit Bezug zum Stand der Technik geschilderten Probleme zumindest teilweise zu lösen und insbesondere ein Thermostatmischventil anzugeben, mit welchem die Solltemperatur nach einem Heißspülen sicher ohne Zuhilfenahme von zusätzlichem Werkzeug wieder eingestellt wird.

Gelöst wird diese Aufgabe mit einem Thermostatventil mit den Merkmalen des unabhängigen Anspruchs. Vorteilhafte Weiterbildungen des Thermostatmischventils sind in den abhängigen Ansprüchen und der Beschreibung angegeben, wobei Merkmale der vorteilhaften Weiterbildungen in technologisch sinnvoller Weise beliebig miteinander kombinierbar sind.

Gelöst wird diese Aufgabe insbesondere durch ein sanitäres Thermostatmischventil mit den eingangs genannten Merkmalen, wobei die Abdeckkappe auf der Verstelleinheit drehfest mittels einer Zwangsführung insbesondere in axialer Richtung geführt ist und die Abdeckkappe ferner drehfest mittels eines Formschlusses an dem Gehäuse oder an der Mischerkartusche festgelegt ist derart, dass die Abdeckkappe nur an dem Gehäuse oder an der Mischerkartusche festlegbar ist, wenn sich die Verstelleinheit in einer durch die Zwangsführung der Abdeckkappe mit der Verstelleinheit und den Formschluss der Abdeckkappe mit dem Gehäuse oder mit der Mischerkartusche vorgegebenen, die Solltemperatur des Mischwassers einstellenden Stellung befindet. Die Zwangsführung zwischen der Abdeckkappe und der Verstelleinheit ist durch eine an einer Innenumfangsfläche der Abdeckkappe und einer Außenumfangsfläche der Verstelleinheit in axialer Richtung verlaufende Nut-Federführung ausgebildet. Es ist also entweder die Nut an der Verstelleinheit und die Feder an der Kappe oder die Nut an der Abdeckkappe und die Feder an der Verstelleinheit ausgebildet. Somit kann erreicht werden, dass die Abdeckkappe nach vollständiger Abnahme von dem Thermostatmischventil zunächst nur teilweise über die Verstelleinheit gestülpt werden kann und dann durch Drehung der Abdeckkappe in die durch den Formschluss der Abdeckkappe mit dem Gehäuse oder mit der Mischerkartusche vorgegebene Stellung gebracht werden kann.

Es ist also vorgesehen, dass die Abdeckkappe sowohl drehfest an der Verstelleinheit als auch drehfest und formschlüssig an dem Gehäuse oder an der Mischerkartusche festlegbar ist, wobei die Verbindung zwischen Abdeckkappe und Verstelleinheit und die Verbindung zwischen Abdeckkappe und Gehäuse oder Mischerkartusche so ausgebildet sind, dass die Abdeckkappe an dem Gehäuse oder der Mischerkartusche nur festlegbar ist, wenn die Verstelleinheit eine vorgegebene Stellung einnimmt. Da die Stellung der Verstelleinheit unmittelbar die Lage des Anschlags für das Thermostatelement der Mischerkartusche vorgibt, kann die an sich abnehmbare Abdeckkappe nur vollständig über die Verstelleinheit gestülpt und an dem Gehäuse oder an der Mischerkartusche festgelegt werden, wenn die gewünschte Solltemperatur durch die Stellung der Verstelleinheit eingestellt ist. Nach dem Spülen mit Heißwasser kann die Abdeckkappe also nur vollständig über die Verstelleinheit gestülpt und an dem Gehäuse oder an der Mischerkartusche festgelegt werden, wenn die Verstelleinheit die Stellung für die die Solltemperatur des Mischwassers eingenommen hat. Beim Überstülpen kann die Abdeckkappe zunächst nur teilweise auf die Verstelleinheit übergestülpt werden, wobei hierbei schon die Abdeckkappe mit der Verstelleinheit aufgrund der zumindest teilweise ausgebildeten Zwangsführung miteinander verbunden sind. Die Abdeckkappe mit der Verstelleinheit kann dann so lange gedreht werden, bis der Formschluss der Abdeckkappe mit dem Gehäuse oder mit der Mischerkartusche herstellbar ist und die Solltemperatur somit eingestellt ist.

Das Gehäuse des Thermostatmischventils weist insbesondere einen Kaltwasserzulauf und einen Warmwasserzulauf sowie einen Mischwasserablauf auf. Die Mischerkartusche weist den Anschlag auf, gegen den sich das von dem Mischwasser zumindest teilweise umspülte Thermostatelement abstützt. Das Thermostatelement wirkt wiederum auf ein Regelelement, welches den Anteil des Wassers von dem Kaltwasserzulauf und dem Warmwasserzulauf regelt. Das von dem Mischwasser umspülte Thermostatelement dehnt sich in Abhängigkeit von der Temperatur des Mischwassers aus oder zieht sich zusammen, so dass über das Regelelement das für die Solltemperatur erforderliche Verhältnis von Kaltwasser und Warmwasser eingestellt wird. Durch Ändern der Lage des Anschlags wird auch das Regelelement axial versetzt, was zu einer Veränderung der Solltemperatur führt.

Die Verstelleinheit umfasst insbesondere alle Elemente, die unmittelbar oder mittelbar die Lage des Anschlags in der Mischerkartusche ändern können. Zumindest einige dieser Elemente der Verstelleinheit ragen an einer Seite über das Gehäuse hinaus. Über diese Elemente wird die Abdeckkappe gestülpt. Die Mischerkartusche umfasst zudem weitere Elemente. Beispielsweise kann die Mischerkartusche gehäuseartige Bauteile umfassen, mit der die Mischerkartusche in dem Gehäuse festgelegt wird. Insbesondere umfasst die Mischerkartusche einen über das Gehäuse hervorstehenden Konturring mit Vorsprüngen und Ausnehmungen, welche mit Vorsprüngen und Ausnehmungen an der Abdeckkappe korrespondieren können, so dass die Abdeckkappe formschlüssig an dem Konturring festlegbar ist.

Die Abdeckkappe kann insbesondere so weit über die Verstelleinheit gestülpt werden, dass sie mit einem an die Kappenöffnung angrenzenden Rand mit dem Gehäuse überlappt. Die Abdeckkappe und das Gehäuse sind in diesem überlappenden Bereich insbesondere so ausgebildet, dass die Abdeckkappe an dem Gehäuse festgelegt ist.

Die Abdeckkappe weist insbesondere auf einer Innenseite Vorsprünge oder Ausnehmungen auf, die mit Ausnehmungen oder Vorsprüngen an einer Außenumfangsfläche der Verstelleinheit so zusammenwirken, dass die Abdeckkappe lediglich in axialer Richtung auf der Verstelleinheit verschoben werden kann, so dass die Abdeckkappe drehfest zu der Verstelleinheit angeordnet ist. Die Abdeckkappe lässt sich insbesondere nur in einer durch die Zwangsführung vorgegebenen Ausrichtung auf die Verstelleinheit aufschieben. In einem nur teilweise über die Verstelleinheit gestülpten Zustand wird also eine Drehung der Abdeckkappe in eine Drehung der Verstelleinheit übersetzt.

Die Abdeckkappe weist ferner in einem an eine Kappenöffnung angrenzenden Bereich Vorsprünge oder Ausnehmungen auf, die mit Ausnehmungen und Vorsprüngen in einem Bereich des Gehäuses korrespondieren, mit der die Kappe in dem festgelegten Zustand das Gehäuse überlappt. Der so ausgebildete Formschluss zwischen Abdeckkappe und Gehäuse ist so ausgebildet, dass die Abdeckkappe nur in genau einer Ausrichtung an dem Gehäuse festgelegt werden kann. Da somit die Abdeckkappe nur in genau einer Ausrichtung über die Verstelleinheit gestülpt werden kann und in nur genau einer Ausrichtung an dem Gehäuse festlegbar ist, muss die Verstelleinheit eine (Dreh-)Stellung einnehmen, welche zu einer Stellung des Anschlags korrespondiert, wenn die Abdeckkappe vollständig auf das Gehäuse geschoben werden soll.

Es kann zudem vorgesehen sein, dass der Formschluss zwischen der Abdeckkappe und dem Gehäuse durch einen im Bereich einer Kappenöffnung der Abdeckkappe und im Bereich einer äußeren Umfangsfläche des Gehäuses angeordneten Eingriff eines Vorsprungs in eine Ausnehmung ausgebildet ist. Es ist also entweder der Vorsprung an der Abdeckkappe und die Ausnehmung an dem Gehäuse oder der Vorsprung an dem Gehäuse und die Ausnehmung an der Abdeckkappe ausgebildet.

Alternativ kann vorgesehen sein, dass der Formschluss zwischen der Abdeckkappe und der Mischerkartusche durch einen Eingriff eines Vorsprungs in eine Ausnehmung ausgebildet ist. Es ist also entweder der Vorsprung an einer Innenseite der Abdeckkappe und die Ausnehmung an einem drehfest zu dem Gehäuse angeordneten Element der Mischerkartusche oder der Vorsprung an dem drehfest zu dem Gehäuse angeordneten Element der Mischerkartusche und die Ausnehmung an der Innenseite der Abdeckkappe ausgebildet. In diesem Zusammenhang ist insbesondere vorgesehen, dass mindestens zwei Vorsprünge auf einer Innenseite der Abdeckkappe ausgebildet sind, die mit entsprechenden Ausnehmungen einer Vielzahl von Ausnehmungen an einem Konturring der Mischerkartusche korrespondieren, so dass die Abdeckkappe nur vollständig über den Konturring schiebbar ist, wenn die Abdeckkappe entsprechend den korrespondieren Vorsprüngen und Ausnehmungen ausgerichtet ist.

Insbesondere ist die Zwangsführung zwischen der Abdeckkappe und der Verstelleinheit in Umfangsrichtung versetzt zu dem Formschluss der Abdeckkappe mit dem Gehäuse oder mit der Mischerkartusche angeordnet. Eine solche Anordnung der Zwangsführung zu dem Formschluss vereinfacht das teilweise Aufschieben der Abdeckkappe auf die Verstelleinheit, da die die Zwangsführung ausbildenden Elemente nicht mit den Elementen zum Formschluss kollidieren können. Nach nur teilweisem Aufschieben der Abdeckkappe kann die Abdeckkappe mit der Verstelleinheit so gedreht werden, bis der Formschluss zwischen Abdeckkappe und Gehäuse oder Mischerkartusche hergestellt werden kann.

Alternativ ist die Zwangsführung der Abdeckkappe mit der Verstelleinheit axial fluchtend zu dem Formschluss der Abdeckkappe mit dem Gehäuse oder mit der Mischerkartusche angeordnet.

In einer bevorzugten Ausführungsform des Thermostatventils umfasst die Verstelleinheit ein auf den Anschlag für das Thermostatelement wirkendes Drehelement und ein auf das Drehelement aufsetzbares Aufsetzelement, wobei das Aufsetzelement insbesondere mittels eines U-förmigen Riegels in einer veränderbaren Ausrichtung zu dem Drehelement festlegbar ist. In einer solchen Ausführungsform sind die Zwangsführung und der Formschluss an dem Aufsetzelement ausgebildet. Durch die veränderbare Ausrichtung des Aufsetzelements zu dem die Position des Anschlagselements versetzenden Drehelement kann die Solltemperatur geändert werden, die durch die Verstelleinheit vorgegeben ist, wenn die Abdeckkappe formschlüssig an dem Gehäuse oder der Mischerkartusche festgelegt wird. Eine solche Verbindung zwischen dem Aufsetzelement und dem Drehelement ist beispielsweise aus EP 0 875 703 B1 bekannt.

Die Erfindung sowie das technische Umfeld werden im Folgenden anhand der Figuren erläutert, wobei darauf hinzuweisen ist, dass die Figuren eine bevorzugte Ausführungsform zeigen. Es zeigen schematisch:
- Fig. 1:: eine erste Ausführungsform des Thermostatmischventils mit einer abgenommenen Abdeckkappe,
- Fig. 2:: das Thermostatmischventil mit festgelegter Kappe in einer ersten Ansicht,
- Fig. 3:: das Thermostatmischventil mit festgelegter Abdeckkappe in einer zweiten Ansicht,
- Fig. 4:: einen Längsschnitt durch das Thermostatmischventil mit festgelegter Abdeckkappe,
- Fig. 5:: einen Querschnitt durch das Thermostatmischventil entlang der Linie K-K der Fig. 4,
- Fig. 6:: eine zweite Ausführungsform des Thermostatmischventils in einer ersten Ansicht,
- Fig. 7:: das Thermostatmischventil in einer zweiten Ansicht und
- Fig. 8:: ein Querschnitt durch das Thermostatmischventil.

Das Thermostatmischventil 1 umfasst ein Gehäuse 2 mit einem Kaltwassereinlass 19, einem Warmwassereinlass 20 und einem Mischwasserauslass 16. In dem Gehäuse 2 ist eine Mischerkartusche 22 angeordnet, die mit einer Verstelleinheit 3 und einem Konturring 23 über das Gehäuse 2 hervorsteht. Über die Verstelleinheit 3 und den Konturring 23 kann eine Abdeckkappe 4 gestülpt werden, die an dem Gehäuse 2 festgelegt wird.

Die Verstelleinheit 3 umfasst ein Aufsetzelement 17, welches mittels eines Riegels 18 an einem Drehelement 21 der Mischerkartusche 22 festgelegt ist. Die Ausrichtung des Aufsetzelements 17 zu dem Drehelement 21 kann geändert werden, indem der Riegel 18 gelöst wird und das Aufsetzelement 17 in einer anderen Ausrichtung auf das Drehelement 21 aufgesetzt und durch den Riegel 18 festgelegt wird.

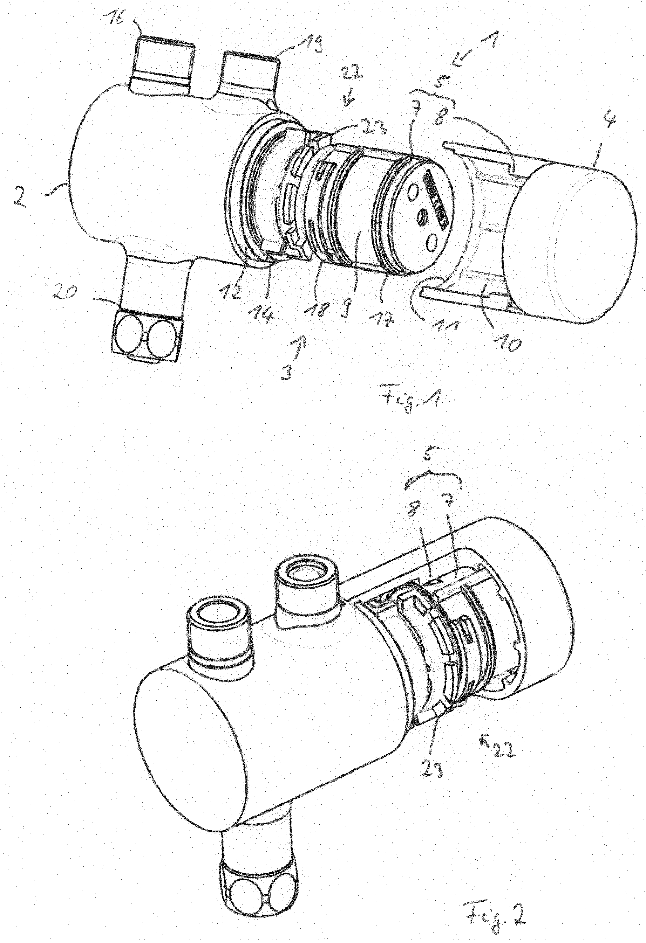

Auf einer Außenumfangsfläche 9 des Aufsetzelements 17 ist eine in axialer Richtung verlaufende Nut 7 ausgebildet, die mit einer an einer Innenumfangsfläche 10 der Abdeckkappe 4 ausgebildeten Feder 8 korrespondiert (siehe insbesondere Fig. 2). Durch die drehfeste Verbindung zwischen Nut 7 und Feder 8 wird eine Zwangsführung 5 zwischen Abdeckkappe 4 und Verstelleinheit 3 realisiert, so dass die Abdeckkappe 4 nur über die Verstelleinheit 3 gestülpt werden kann, wenn sich die Abdeckkappe 4 in einer durch die Zwangsführung 5 vorgegebene Ausrichtung zu der Verstelleinheit 3 befindet. In einem nur teilweise auf die Verstelleinheit 3 gestülpten Zustand kann somit durch die Drehung der Abdeckkappe 4 das Aufsetzelement 17 und somit auch das Drehelement 21 insbesondere relativ zu dem Gehäuse 2 und dem Konturring 23 gedreht werden.

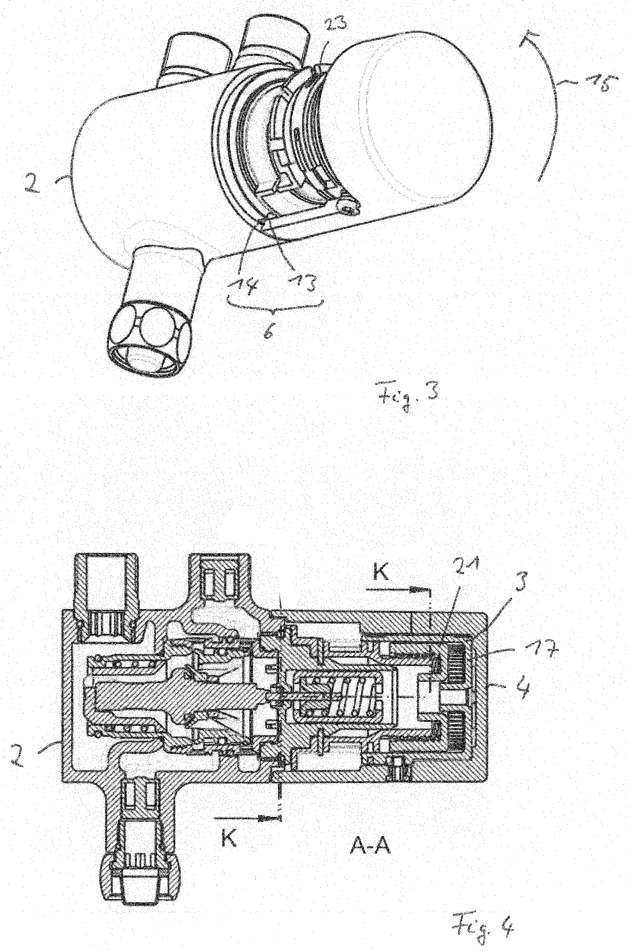

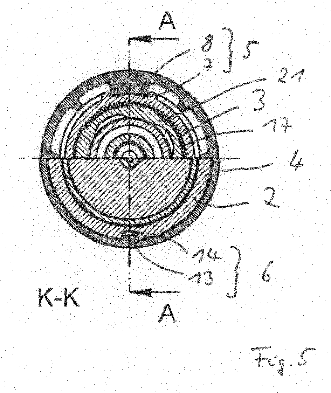

Zudem ist an einer äußeren Umfangsfläche 12 das Gehäuse 2 an einem der Abdeckkappe 4 zugewandten Ende des Gehäuses 2, welches im aufgesteckten Zustand mit der Abdeckkappe 4 überlappt, eine Ausnehmung 14 ausgebildet, die mit einem Vorsprung 13 an der Abdeckkappe 4 korrespondiert (siehe insbesondere Fig. 3 und 5). Durch die Ausnehmung 14 an dem Gehäuse 2 und dem Vorsprung 13 an der Abdeckkappe 4 wird ein Formschluss ausgebildet. Die Abdeckkappe 4 kann daher nur an dem Gehäuse 2 festgelegt werden, wenn die Abdeckkappe 4 entsprechend des Formschlusses 6 zu dem Gehäuse 2 ausgerichtet ist.

Da somit die Abdeckkappe 4 nur in einer durch die Zwangsführung 5 vorgegebenen Ausrichtung über die Verstelleinheit 3 stülpbar ist und in einer durch den Formschluss 6 vorgegebenen Stellung an dem Gehäuse 2 festlegbar ist, kann eine Festlegung der Abdeckkappe 4 an dem Gehäuse 2 nur erfolgen, wenn die Verstelleinheit 3 in einer entsprechenden Stellung ausgerichtet ist. Diese Stellung der Verstelleinheit 3 korrespondiert mit der gewünschten Solltemperatur des Mischwassers.

Wie insbesondere aus Fig. 1 zu erkennen ist, ist der Formschluss 5 zwischen Abdeckkappe 4 und Verstelleinheit 3 in Umfangsrichtung 15 versetzt zu dem Formschluss 6 zwischen Abdeckkappe 4 und Gehäuse 2 angeordnet. Alternativ könnten der Formschluss 6 und die Zwangsführung 5 in axialer Richtung fluchtend zueinander angeordnet sein.

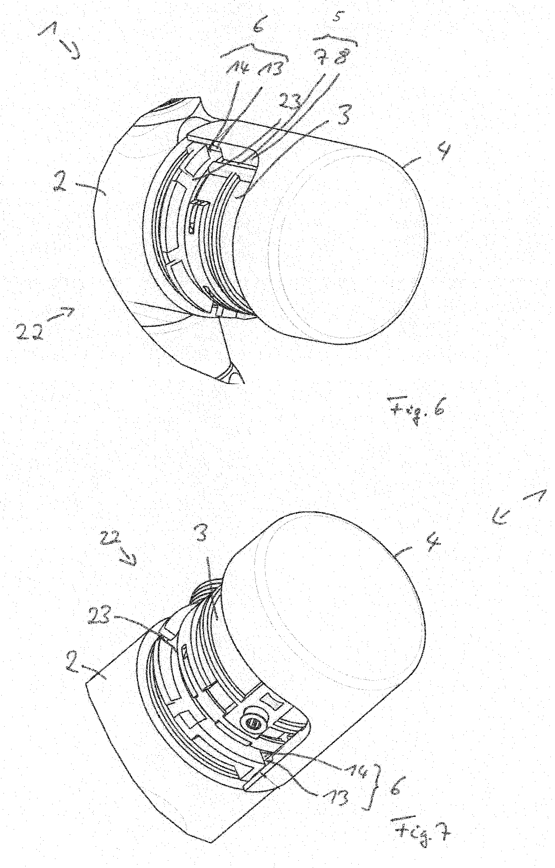

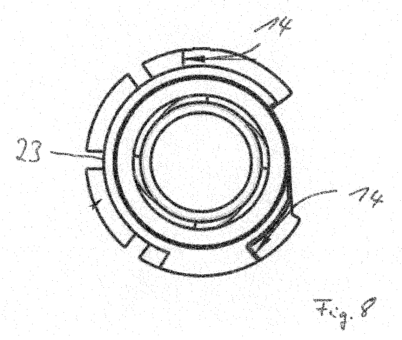

Die Fig. 6 bis 8 zeigen ein weiteres Ausführungsbeispiel des Thermostatmischventils 1, wobei im Folgenden im Wesentlichen auf die Unterschiede zu dem ersten Ausführungsbeispiel eingegangen wird.

Bei diesem Ausführungsbeispiel wird der Formschluss 6 zur drehfesten Festlegung der Verstelleinheit 3 zwischen der Abdeckkappe 4 und der Mischerkartusche 22 gebildet. Die Mischerkartusche 22 weist einen Konturring 23 auf, der im montierten Zustand drehfest in dem Gehäuse 2 angeordnet ist. An dem Konturring 23 sind mehrere Ausnehmungen 14 ausgebildet. Die Abdeckkappe 4 weist zwei Vorsprünge 13 auf, die so angeordnet sind, dass die Abdeckkappe 4 nur in genau einer Ausrichtung vollständig über den Konturring 23 geschoben werden kann. Somit ist sichergestellt, dass die über die Zwangsführung 6 mit der Verstelleinheit 3 verbundene Abdeckkappe 4 nur in genau einer Ausrichtung vollständig von der Abdeckkappe 4 überdeckt werden kann. In dieser Ausrichtung ist die gewünschte Solltemperatur eingestellt.

### Bezugszeichenliste

- 1: Thermostatmischventil
- 2: Gehäuse
- 3: Verstelleinheit
- 4: Abdeckkappe
- 5: Zwangsführung
- 6: Formschluss
- 7: Nut
- 8: Feder
- 9: Außenumfangsfläche
- 10: Innenumfangsfläche
- 11: Kappenöffnung
- 12: äußere Umfangsfläche
- 13: Vorsprung
- 14: Ausnehmung
- 15: Umfangsrichtung
- 16: Mischwasserauslass
- 17: Aufsetzelement
- 18: Riegel
- 19: Kaltwassereinlass
- 20: Warmwassereinlass
- 21: Drehelement
- 22: Mischerkartusche
- 23: Konturring

## Patentansprüche

1. Sanitäres Thermostatmischventil (1) mit einer in einem Gehäuse (2) angeordneten, ein Thermostatelement aufweisenden Mischerkartusche (22), die eine Solltemperatur des Mischwassers festlegt, wobei die Höhe der Solltemperatur durch eine auf einen Anschlag für das Thermostatelement des Thermostatventils wirkende Verstelleinheit (3) eingestellt werden kann, über die eine Abdeckkappe (4) gestülpt ist, wobei die Abdeckkappe (4) auf der Verstelleinheit (3) drehfest mittels einer Zwangsführung (5) geführt ist, **dadurch gekennzeichnet, dass** die Abdeckkappe ferner drehfest mittels eines Formschlusses (6) an dem Gehäuse (2) oder an der Mischerkartusche (22) festgelegt ist derart, dass die Abdeckkappe nur an dem Gehäuse (2) oder an der Mischerkartusche (22) festlegbar ist, wenn sich die Verstelleinheit (3) in einer durch die Zwangsführung (5) der Abdeckkappe (4) mit der Verstelleinheit (3) und den Formschluss (6) der Abdeckkappe (4) mit dem Gehäuse (2) oder mit der Mischerkartusche (22) vorgegebenen, die Solltemperatur des Mischwassers einstellenden Stellung befindet, wobei die Zwangsführung (5) der Abdeckkappe (4) und der Verstelleinheit (3) durch eine an einer Innenumfangsfläche (10) der Abdeckkappe (4) und einer Außenumfangsfläche (9) der Verstelleinheit (3) in axialer Richtung verlaufende Nut-Feder-Führung (7, 8) ausgebildet ist, so dass sich die Abdeckkappe (4) nur in genau einer durch die Zwangsführung (5) vorgegebenen Ausrichtung auf die Verstelleinheit (3) aufschieben lässt.

2. Sanitäres Thermostatmischventil (1) nach Anspruch 1, wobei der Formschluss (6) zwischen der Abdeckkappe (4) und dem Gehäuse (2) durch einen im Bereich einer Kappenöffnung (11) der Abdeckkappe (4) und im Bereich einer äußeren Umfangsfläche (12) des Gehäuses (2) angeordneten Eingriff eines Vorsprungs (13) in eine Ausnehmung (14) ausgebildet ist.

3. Sanitäres Thermostatmischventil (1) nach Anspruch 1, wobei der Formschluss (6) zwischen der Abdeckkappe (4) und der Mischerkartusche (22) durch einen Eingriff eines Vorsprungs (13) in eine Ausnehmung (14) ausgebildet ist.

4. Sanitäres Thermostatmischventil (1) nach einem der vorhergehenden Ansprüche, wobei die Zwangsführung (5) der Abdeckkappe (4) mit der Verstelleinheit (3) in Umfangsrichtung (15) versetzt zu dem Formschluss (6) der Abdeckkappe (4) mit dem Gehäuse (2) oder mit der Mischerkartusche (22) angeordnet ist.

5. Sanitäres Thermostatmischventil (1) nach einem der Ansprüche 1 bis 3, wobei die Zwangsführung (5) der Abdeckkappe (4) mit der Verstelleinheit (3) axial fluchtend zu dem Formschluss (6) der Abdeckkappe (4) mit dem Gehäuse (2) oder mit der Mischerkartusche (22) angeordnet ist.

6. Sanitäres Thermostatmischventil (1) nach einem der vorhergehenden Ansprüche, wobei die Verstelleinheit (3) ein auf den Anschlag für das Thermostatelement wirkendes Drehelement (21) und ein auf das Drehelement (21) aufsetzbares Aufsetzelement (17) umfasst, wobei das Aufsetzelement (17) insbesondere mittels eines U-förmigen Riegels (18) in einer veränderbaren Ausrichtung zu dem Drehelement (16) festlegbar ist.

## Claims

1. A sanitary thermostat mixer valve (1) with a mixer cartridge (22), which is arranged in a housing (2), and which has a thermostat element and which determines a target temperature of the mixed water, wherein the value of the target temperature can be set by an adjusting unit (3) acting on a stop for the thermostat element of the thermostat valve, wherein a covering cap (4) is pulled over the adjusting unit (3),wherein the covering cap (4) is held on the adjusting unit (3) in a rotationally fixed manner by means of a restraint (5),
**characterised in that** the covering cap is also fastened in a rotationally fixed manner by means of a positive connection (6) to the housing (2) or to the mixer cartridge (22) in such a way that the covering cap can only be fastened to the housing (2) or to the mixer cartridge (22) if the adjusting unit (3) is in a position for adjusting the target temperature of the mixing water predefined by the restraint (5) of the covering cap (4) with the adjusting unit (3) and the positive connection (6) of the covering cap (4) with the housing (2) or with the mixer cartridge (22), wherein the restraint (5) of the covering cap (4) and the adjusting unit (3) is formed by a groove-spring guide (7, 8) extending axially on an inner circumferential surface (10) of the covering cap (4) and an outer circumferential surface (9) of the adjusting unit (3), so that the covering cap (4) can only be displaced in a direction towards the adjusting unit (3) in exactly one orientation predefined by the restraint (5).

2. The sanitary thermostat mixer valve (1) according to claim 1, wherein the positive connection (6) between the covering cap (4) and the housing (2) is formed by the engagement, in a recess (14), of a projection (13) arranged in the area of a cap opening (11) in the covering cap (4) and in the area of an outer circumferential surface (12) of the housing (2).

3. The sanitary thermostat mixer valve (1) according to claim 1, wherein the positive connection (6) between the covering cap (4) and the mixer cartridge 22) is formed by an engagement of a projection (13) in a recess (14).

4. The sanitary thermostat mixer valve (1) according to any one of the preceding claims, wherein the restraint (5) of the covering cap (4) with the adjusting unit (3) is arranged offset in the circumferential direction (15) with regard to the positive connection (6) of the covering cap (4) to the housing (2) or to the mixer cartridge (22).

5. The sanitary thermostat mixer valve (1) according to any one of claims 1 to 3, wherein the restraint (5) of the covering cap (4) with the adjusting unit (3) is arranged axially flush with regard to the positive connection (6) of the covering cap (4) to the housing (2) or to the mixer cartridge (22).

6. The sanitary thermostat mixer valve (1) according to any one of the preceding claims, wherein the adjusting unit (3) comprises a rotating element (21) acting on the stop for the thermostat element and a fit-on element (17) which can be fitted on the rotating element (21), wherein the fit-on element (17) can in particular be fastened by means of a U-shaped lock (18) in a variable direction with regard to the rotating element (16).

## Revendications

1. Mitigeur sanitaire (1), doté d'une cartouche de mitigeur (22), placée dans un boîtier (2), comportant un élément thermostatique, qui fixe une température de consigne de l'eau mélangée, sachant que le niveau de la température de consigne peut être réglé par une unité de réglage (3) agissant sur une butée pour l'élément thermostatique du mitigeur, sur laquelle est emboîté, un capuchon protecteur (4), le capuchon protecteur (4) étant guidé de manière solitaire en rotation sur l'unité de réglage (3) au moyen d'un guidage forcé (5),
**caractérisé en ce que** le capuchon protecteur est immobilisé par ailleurs de manière solidaire en rotation au moyen d'une complémentarité de forme (6) sur le boîtier (2) ou sur la cartouche de mitigeur (22), de telle sorte que le capuchon protecteur ne puisse être immobilisé sur le boîtier (2) ou sur la cartouche de mitigeur (22) que si l'unité de réglage (3) se trouve dans une position prédéfinie par le guidage forcé (5) du capuchon protecteur (4) avec l'unité de réglage (3) et par la complémentarité de forme (6) du capuchon protecteur (4) avec le boîtier (2) ou avec la cartouche de mitigeur (22), réglant la température de consigne de l'eau mélangée, le guidage forcé (5) du capuchon protecteur (4) et de l'unité de réglage (3) étant réalisé à l'aide d'un guidage rainure/languette (7, 8), s'étendant en direction axiale sur une surface périphérique intérieure (10) du capuchon protecteur (4) et une surface périphérique extérieure (9) de l'unité de réglage (3), de sorte que le capuchon protecteur (4) ne se laisse emboîter sur l'unité de réglage (3) que dans précisément une orientation prédéfinie par le guidage forcé (5).

2. Mitigeur sanitaire (1) selon la revendication 1, la complémentarité de forme (6) entre le capuchon protecteur (4) et le boîtier (2) étant réalisée par un engagement placé dans la région d'une ouverture de capuchon (11) du capuchon protecteur (4) et dans la région d'une surface périphérique extérieure (12) du boîtier (2) d'une saillie (13) dans un évidement (14).

3. Mitigeur sanitaire (1) selon la revendication 1, la complémentarité de forme (6) entre le capuchon protecteur (4) et la cartouche de mitigeur (22) étant réalisée par un engagement d'une saillie (13) dans un évidement (14).

4. Mitigeur sanitaire (1) selon l'une quelconque des revendications précédentes, le guidage forcé (5) du capuchon protecteur (4) avec l'unité de réglage (3) étant placé en direction périphérique (15) avec un décalage par rapport à la complémentarité de forme (6) du capuchon protecteur (4) avec le boîtier (2) ou avec la cartouche de mitigeur (22).

5. Mitigeur sanitaire (1) selon l'une quelconque des revendications 1 à 3, le guidage forcé (5) du capuchon protecteur (4) avec l'unité de réglage (3) étant placé en alignement axial avec la complémentarité de forme (6) du capuchon protecteur (4) avec le boîtier (2) ou avec la cartouche de mitigeur (22).

6. Mitigeur sanitaire (1) selon l'une quelconque des revendications précédentes, l'unité de réglage (3) comprenant un élément rotatif (21) agissant sur la butée pour l'élément thermostatique et un élément d'emboîtement (17) emboîtable sur l'élément rotatif (21), l'élément d'emboîtement (17) pouvant être immobilisé notamment au moyen d'un verrou en forme de U (18) dans une orientation variable par rapport à l'élément rotatif (16).
